# EUROPEAN PATENT SPECIFICATION

(11) **EP 1 529 558 B1**
(45) Date of publication and mention of the grant of the patent: **10.01.2007**
(21) Application number: 04026556.3
(22) Date of filing: 09.11.2004
(51) Int. Cl.: A63F 13/00

(54) **Gaming machine**
Spielvorrichtung
Dispositiv de jeu

(30) Priority: 10.11.2003 JP 2003380379
(43) Date of publication of application: 11.05.2005
(73) Proprietor: Aruze Corp., Tokyo (JP)
(72) Inventor: Hattori, Takanori, Koto-ku Tokyo (JP)
(74) Representative: Prechtel, Jörg

(56) References cited:
- EP-A- 1 147 794
- PATENT ABSTRACTS OF JAPAN vol. 1995, no. 10, 30 November 1995 (1995-11-30) & JP 07 181934 A (SEGA ENTERP LTD), 21 July 1995 (1995-07-21)

## Description

### CROSS-REFERENCES TO THE RELATED APPLICATIONS

This application is based upon and claims the priority from a prior Japanese patent application No. 2003-380379, filed on November 10, 2003, in Japan.

This application is related to a co-pending U.S. patent application referred to as a prior Japanese patent application No. 2003-380378 filed in Japan on November 10, 2003.

### BACKGROUND OF THE INVENTION

### 1. FIELD OF THE INVENTION:

The present invention relates to a gaming machine such as a gaming machine for business use, a gaming machine for home use, for example.

### 2. RELATED ART:

Conventionally, among various gaming machines, there has been known a gaming machine which increases display magnifications of a specific region in a game image displayed on a display and displays the magnified specific region on a portion of the display by manipulating a controller (see Japanese Laid-open patent publication 2001-286678 (patent document 1)). According to the gaming machine described in the patent document 1, a player arbitrarily can point out an area which he/she wants to watch and can increase the display magnifications of the area and hence, the player can reflect his/her will on a displayed content of the game image whereby it is possible to provide vivid effects to the player in a shooting game or the like.

Further, there has been also known a gaming machine which includes binoculars incorporating a display capable of displaying a game image therein and allows a player to advance a game by manipulating buttons or the like mounted on the binoculars while watching the game image (see Japanese Laid-open utility model publication 2000-58 (patent document 2) and Japanese Laid-open patent publication 2000-259854 (patent document 3)). According to the gaming machines disclosed in these patent documents 2, 3, it is possible to provide a unique game in which the player can perform the game while watching the binoculars.

For an example of the prior art see JP-A-7-181934.

### SUMMARY OF THE INVENTION

However, with respect to the gaming machine described in the patent document 1, both of a usual game image and an image of the specific region whose display magnifications are increased are displayed on a single display. Accordingly, the gaming machine has a drawback that the display method of the game image lacks fun and reality and, at the same time, the way of watching the game image becomes monotonous and hence, the gaming machine lacks interest. Further, also with respect to the gaming machines described in the patent documents 2, 3, a game image is always displayed only on a display in the inside of the binoculars and hence, the player must always look into the binoculars whereby the way of watching the game image becomes monotonous thus giving rise to a drawback that the gaming machine lacks interest. Further, to impose the player to always watch the binoculars makes the player become bored and tired with the game.

The present invention has been made in view of the above-mentioned drawbacks and it is an object of the present invention to provide a gaming machine which makes a player have high interest by diversifying the player's ways of watching game images.

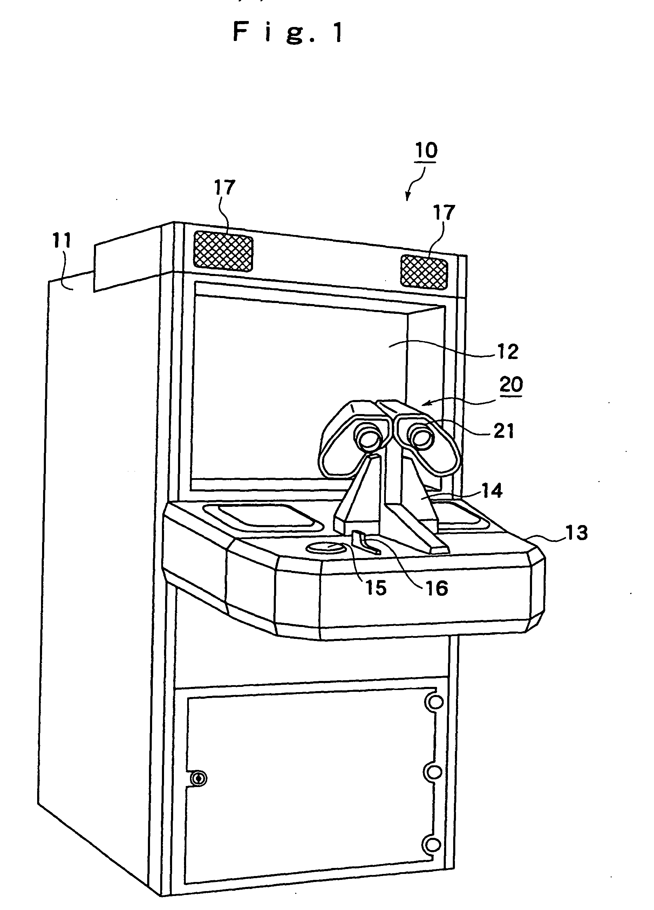

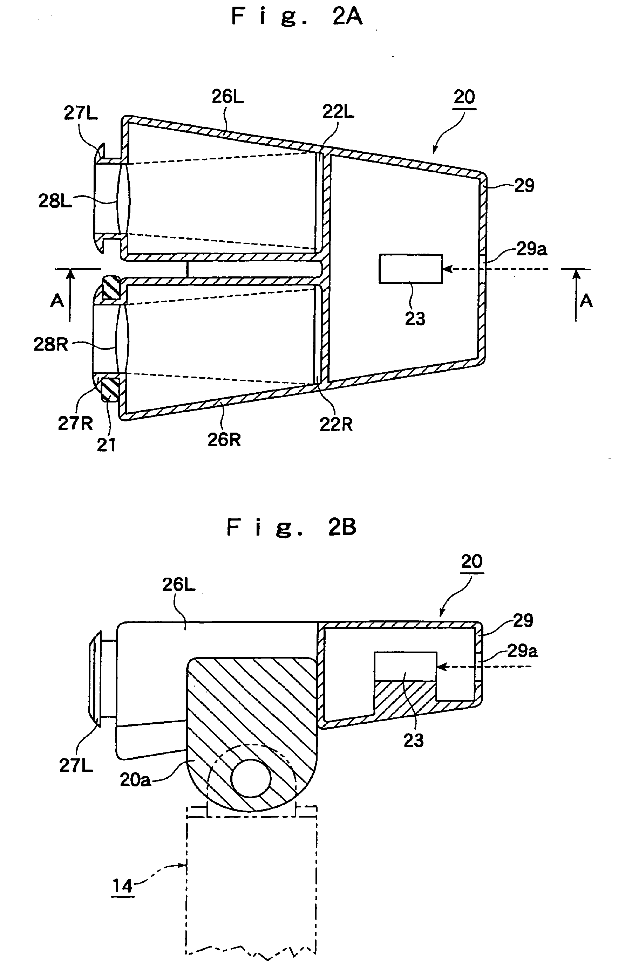

To achieve the above-mentioned object, the present invention provides the following constitution.
(1) According to the present invention as defined in claim 1, there is provided a gaming machine comprising:
   a main body (for example, a main body 11) including a main display (for example, a main display 12) on which a game image is displayed;
   an aiming controller (for example, aiming controller 20) being configured to be capable of changing a direction and/or a position thereof in response to a control by a player and indicating an aiming position on the game image displayed on the main display;
   a sub display (for example, sub display 22) mounted on the aiming controller and having a portion of the game image displayed thereof in an enlarged manner;
   first display control means performing a display control of the game image on the main display;
   aiming position detection means detecting the aiming position on the game image indicated by the aiming controller; and
   second display control means performing an enlarged display control of a portion of the game image on the sub display such that the portion of the game image includes the aiming position detected by the aiming position detection means (see Fig. 1, Fig. 2).
   Further, the present invention provides the following constitutions.
(2) A gaming machine having the above-mentioned constitution (1) is also characterized in that the aiming controller (for example, an aiming controller 20) is constituted as binoculars (see Fig. 1).
(3) A gaming machine having the above-mentioned constitution (1) is also characterized in that the main body (for example, the main body 11) includes a game process control part (for example, a control button 15) to which an instruction related to the advance of the game is inputted by a player (see Fig. 1).
(4) A gaming machine having the above-mentioned constitution (1) is also characterized in that the aiming controller (for example, the aiming controller 20) includes a magnification setting control part (a magnification setting dial 21) for setting the magnification of the game image to be displayed in an enlarged manner on the sub display (for example, a sub display 22) (see Fig. 1, Fig. 2).
(5) A gaming machine having the above-mentioned constitution (1) is also characterized in that the second display control means performs the enlarged display control of the portion of the game image on the sub display such that the portion of the game image includes an image which is not included in the game image displayed on the main display.

According to the present invention, it is possible to diversify the player's ways of watching the game image and hence, it is possible to provide the gaming machine which possesses high interest.

### BRIEF DESCRIPTION OF THE DRAWINGS

Fig. 1 is a perspective view schematically showing one example of the gaming machine of the present invention;
Fig. 2A and Fig. 2B are explanatory views showing a aiming controller of the gaming machine shown in Fig. 1, wherein Fig. 2A is a schematic horizontal cross-sectional view of the aiming controller and Fig. 2B is a cross-sectional view taken along a line A-A in Fig. 2A;
Fig. 3 is a block diagram showing the inner constitution of the gaming machine shown in Fig. 1;
Fig. 4A to Fig. 4C are explanatory views of an aiming position detection part, wherein Fig. 4A is a view for explaining the constitution of the aiming position detection part and Fig. 4B and Fig. 4C are views for explaining the aiming position detection processing;
Fig. 5 is flow chart showing an aiming position detection routine in an aiming position detection circuit;
Fig. 6 is a flow chart showing the game control processing routine executed by a control circuit;
Fig. 7 is a view for explaining the processing according to a display control on a sub display;
Fig. 8A to Fig. 8D are explanatory views of game images, wherein Fig. 8A is a view showing one example of the game image displayed on the main display and Fig. 8B to Fig. 8D show one example of the game image displayed on the sub display;
Fig. 9 is a perspective view schematically showing another embodiment of the gaming machine of the present invention;
Fig. 10 is a perspective view schematically showing another embodiment of the gaming machine of the present invention;
Fig. 11 is a perspective view schematically showing another embodiment of the gaming machine of the present invention; and
Fig. 12 is a perspective view schematically showing another embodiment of the gaming machine of the present invention.

### DESCRIPTION OF THE PREFERRED EMBODIMENTS

Embodiments of the present invention are explained in conjunction with attached drawings.

Fig. 1 is a perspective view which schematically shows one example of a gaming machine of the present invention.

On an upper portion of a front surface of a main body 11 of the gaming machine 10, a main display 12 which is formed of a CRT (Cathode Ray Tube) is mounted. On the main display 12, a game image corresponding to an advancing state of the game or the like is displayed. Further, on an upper portion of the main display 12, two speakers 17 which are arranged in the left and right direction are mounted and BGM, sounds, sound effects and the like are outputted suitably corresponding to the advancing state or the like of the game from these speakers 17.

Further, on a lower portion of the main display 12 of the main body 11, a control panel 13 which projects frontwardly toward a player is formed. On a center portion of an upper surface of the control panel 13, a support strut 14 is mounted. On an upper end of the support strut 14, an aiming controller 20 having a shape which imitates binoculars is mounted. The player can manipulate the aiming controller 20 with his/her elbows rested on the control panel 13.

The aiming controller 20 is provided for indicating the aiming position on the game image displayed on the main display 12, wherein the aiming controller 20 is mounted on an upper end of the support strut 14 such that the direction of the aiming controller 20 can be changed by the control of the player. In the inside of the aiming controller 20, sub displays 22L, 22R (not shown in the drawing) are disposed. On the sub displays 22L, 22R, a portion of the game image including the above-mentioned aiming position is displayed in an enlarged manner. Further, the aiming controller 20 is provided with a magnification setting dial 21 which constitutes a magnification setting control part and hence, it is possible to change the magnifications of the game image displayed on the sub displays 22L, 22R by the control of the player. Further, the aiming controller 20 is explained in detail later in conjunction with drawings.

Further, on an upper surface of the control panel 13, a control button 15 which constitutes a game process control part is mounted. The player can advance the game by pushing down this control button 15. Further, on an upper surface of the control panel 13, a coin insertion slot 16 is formed and a coin is inserted into the coin insertion slot 16 for starting the game. In the inside of the coin insertion slot 16, a coin detector 18 (not shown in the drawing) is provided and a coin inserted into the coin insertion slot 16 is detected by the coin detector 18.

In the present invention, although the position where the game process control part is formed is not particularly limited, as in the case of the gaming machine 10 shown in Fig. 1, it is desirable that the game process control part (control button 15) is mounted on the main body 11. This is because that the player can advance the game by manipulating the control button 15 formed on the main body 11 with another hand while manipulating the aiming controller 20 with one hand and hence, the player can smoothly advance the game while watching the main display 12 or the sub display 22.

Further, in the present invention, as in the case of the gaming machine 10 shown in Fig. 1, it is desirable that the magnification setting control part (magnification setting dial 21) is provided to the aiming controller 20. This is because that the ways of watching the game image can be diversified. Further, it is desirable that the magnification setting control part (magnification setting dial 21) is mounted on the aiming controller 20. This is because that in a state that the player watches the sub displays 22 (22L, 22R) formed on the aiming controller 20, the player can manipulate the magnification setting dial 21 mounted on the aiming controller 20 while changing the direction of the aiming controller 20 with his/her single hand whereby availability of the game control can be enhanced.

Fig. 2A is a horizontal cross-sectional view which schematically shows the aiming controller 20 of the gaming machine 10 shown in Fig. 1 and Fig. 2B is a cross-sectional view taken along a line A-A. In the drawing, an arrow indicated by a broken line indicates a scanning light from the main display 12.

As shown in Fig. 2A, the aiming controller 20 is constituted as binoculars and is constituted of hollow drum portions 26L, 26R and a hollow connecting portion 29 which connects these hollow drum portions 26L, 26R. On distal ends (left side in the drawing) of the drum portions 26L, 26R, eyepiece portions 27L, 27R respectively having an approximately cylindrical shape are mounted. In the respective eyepiece portions 27L, 27R, eyepiece lenses 28L, 28R are respectively fit. Further, in the inside of the drum portions 26L, 26R, the sub displays 22L, 22R which are respectively formed of a rectangular LCD (Liquid Crystal Display) are mounted. On these sub displays 22L, 22R, a portion of the game image which is displayed on the main display 12 (not shown in the drawing) is displayed in an enlarged manner. By watching the inside of the drum portions 26L, 26R from the eyepiece portions 27L, 27R, the player can watch the portion of the game image which is displayed in an enlarged manner on the sub displays 22L, 22R. Further, the magnification setting dial 21 is rotatably mounted on the eyepiece portion 27R and hence, the player can change the magnifications of the game image which is displayed on the sub display 22 (22L, 22R) in an enlarged manner by manipulating the magnification setting dial 21.

As shown in Fig. 2A and Fig. 2B, a lens 29a is fitted in an end portion (right side in the drawing) of a connection portion 29, while a photo sensor 23 is arranged in the inside of the connection portion 29. The photo sensor 23 is configured to generate a pulse signal when the photo sensor 23 receives a scanning light generated by raster scanning of the main display 12 (not shown in the drawing) through the lens 29a.

Further, as shown in Fig. 2A, the aiming controller 20 is mounted on the support strut 14 using the connection member 20a such that the aiming controller 20 can have the direction thereof changed in the up-and-down direction within a predetermined range. Further, although not shown in the drawing, a portion of the support strut 14 is configured to be rotatable within a predetermined range so as to allow the aiming controller 20 to change the direction thereof in the left-and-right direction within a predetermined range. Accordingly, the player can arbitrarily change the direction of the aiming controller 20 in the up-and-down direction as well as in the left-and-right direction within a predetermined range by the manual control.

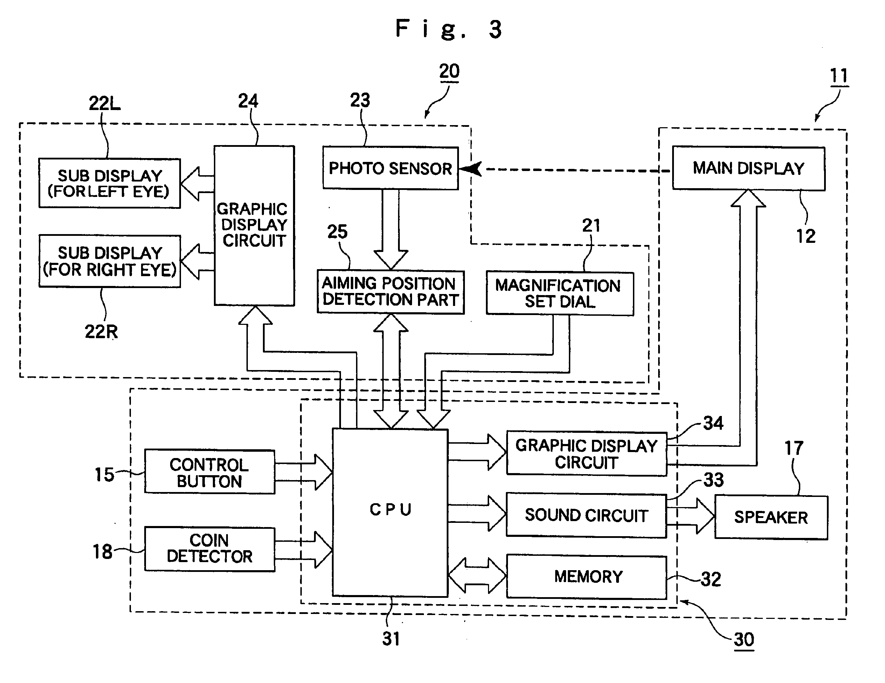

Fig. 3 is a block diagram showing the inner constitution of the gaming machine 10 shown in Fig. 1.

In the inside of the main body 11 of the gaming machine 10, a control circuit 30 is provided. The control circuit 30 includes a CPU (Central Processing Unit) 31, a memory 32, a sound circuit 33 and graphic display circuit 34. In the memory 32, a program related to a game control, various data including various image data which are displayed on the main display 12 and the sub display 22 (22L, 22R) and the like, for example, are stored. The sound circuit 33 is connected with the speakers 17 through a sound amplifier (not shown in the drawing). The graphic display circuit 34 allows the main display 12 to display the game image based on a command (a display control command) from the CPU 31.

The control button 15 which is mounted on the main body 11 is connected with the CPU 31 of the control circuit 30 and supplies a control signal to the CPU 31 when the player pushes down the control button 15. Further, the coin detector 18 is connected with the CPU 31 and transmits a detection signal to the CPU 31 when the coin detector 18 detects a predetermined coin.

The photo sensor 23 which is mounted in the inside of the aiming controller 20 transmits a detection pulse to an aiming position detection part 25 upon receiving the scanning light (indicated by an arrow indicated by a broken line in the drawing) from the main display 12.

The aiming position detection part 25 receives the detection pulse from the photo sensor 23, a clock pulse (CLK) from the control circuit 30, and a horizontal synchronizing signal (HSYNC) and a vertical synchronizing signal (VSYNC) from the main display 12 and detects the aiming position of the aiming controller 20 based on these pulses and signals. The horizontal synchronizing signal (HSYNC) and the vertical synchronizing signal (VSYNC) may be directly received from the graphic display circuit 34 or the like or an HV separator may be mounted in the inside of the aiming position detection part 25 and these signals may be extracted from a video output from the graphic display circuit 34.

The aiming position detection part 25 will be explained in detail later in conjunction with drawings.

The magnification setting dial 21 which is provided to the aiming controller 20 is rotatably mounted on the eyepiece portion 27R (see Fig. 2A) and an angular signal is transmitted to the CPU 31 when the magnification setting dial 21 is manipulated.

The graphic display circuit 24 of the aiming controller 20 displays the game image on the sub display 22L (for left eye) and the sub display 22R (for right eye) in an enlarged manner based on a command (display control command) from the CPU 31.

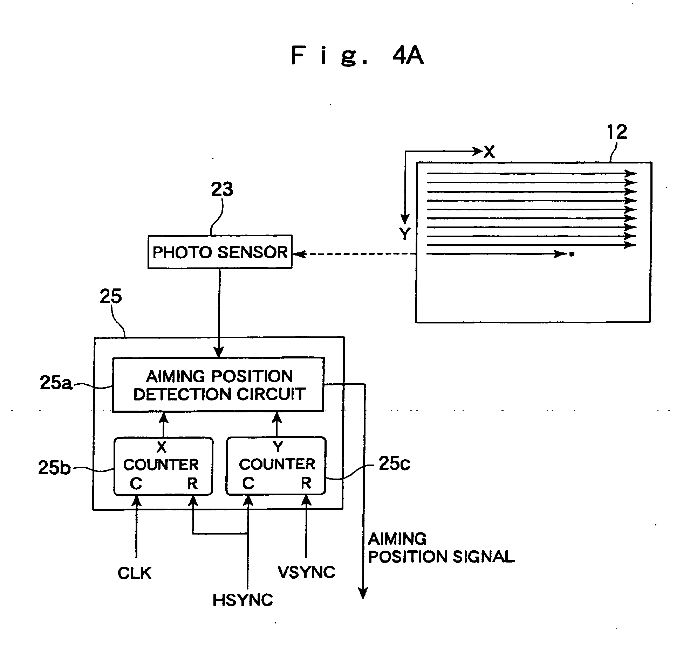

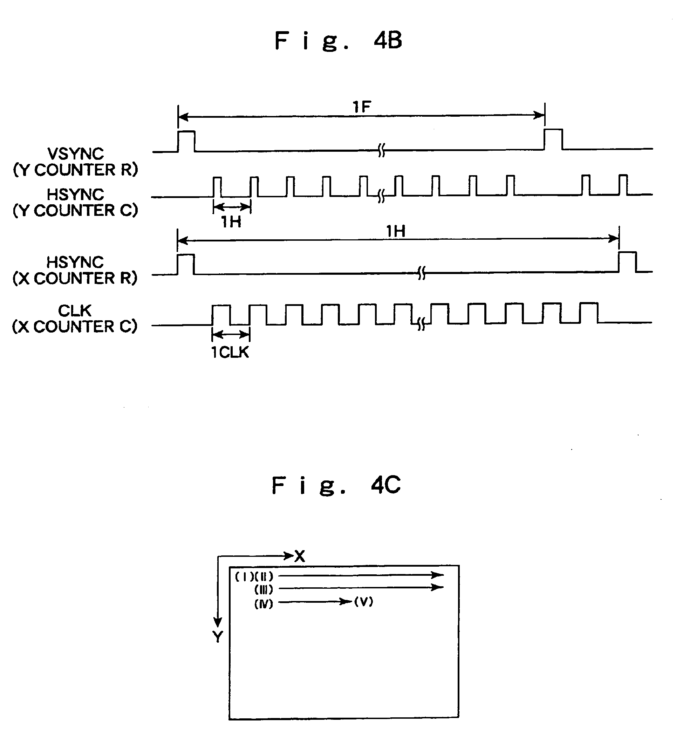

Fig. 4A is a view for explaining the constitution of the aiming position detection part 25 and Fig. 4B and Fig. 4C are views for explaining the aiming position detection processing.

The aiming position detection part 25 includes an aiming position detection circuit 25a, an X counter 25b and a Y counter 25c. The X counter 25b is provided for detecting an X coordinate of the aiming position and the Y counter 25c is provided for detecting a Y coordinate of the aiming position. The X counter 25b and the Y counter 25c are respectively provided with a reset terminal R and a clock terminal C.

The detection pulse from the photo sensor 23 is inputted to the aiming position detection circuit 25a. The clock pulse (CLK) from the control circuit 30 is inputted to the clock terminal C of the X counter 25b. The horizontal synchronizing signal (HSYNC) from the main display 12 is inputted to the reset terminal R of the X counter 25b and the clock terminal C of the Y counter 25c. The vertical synchronizing signal (VSYNC) from the main display 12 is inputted to the reset terminal R of the Y counter 25c.

Accordingly, the X counter 25b increases one count each time the clock pulse (CLK) is inputted one time and resets the count when the horizontal synchronizing signal (HSYNC) is inputted. Further, the Y counter 25c increases one count each time the horizontal synchronizing signal (HSYNC) is inputted one time and resets the count when the vertical synchronizing signal (VSYNC) is inputted.

Fig. 4B shows the relationship between the vertical synchronizing signal (VSYNC) and the horizontal synchronizing signal (HSYNC) which are inputted to the Y counter 25c and the relationship between the horizontal synchronizing signal (HSYNC) and the clock pulse (CLK) which are inputted to the X counter 25b. In the drawing, 1F indicates a display period of one screen, 1H indicates one horizontal scanning period, and 1CLK indicates a period of clock.

Due to such a constitution, the Y counter 25c is reset at a point (I) shown in Fig. 4C, that is, at an initial point of the display period of one screen. Then, the Y counter 25c increases the count for every 1H. On the other hand, the X counter 25b is reset at points (II) to (IV) shown in Fig. 4C, that is, at an initial point of one horizontal scanning period 1H. Then, the X counter 25b increases the count for every clock pulse 1CLK.

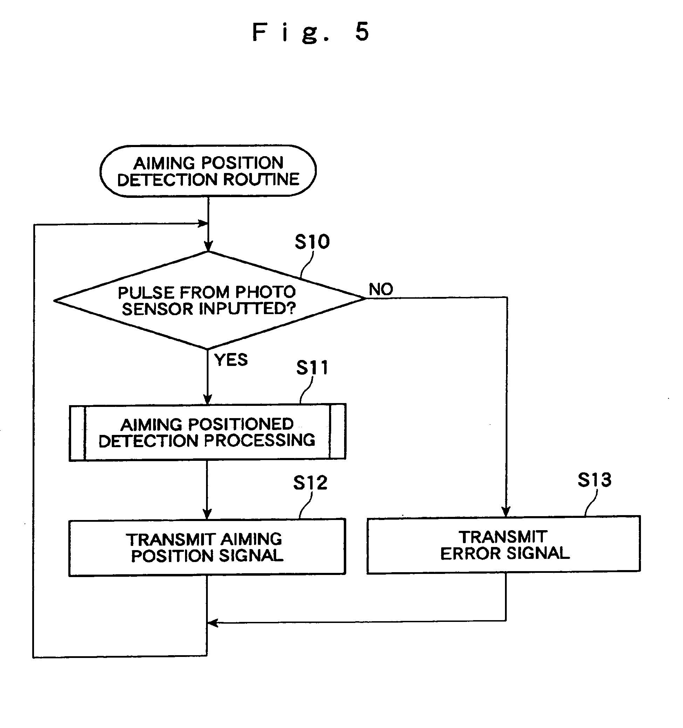

Fig. 5 is a flow chart showing an aiming position detection processing routine in the aiming position detection circuit 25a.

First of all, it is determined whether the detection pulse from the photo sensor 23 is inputted to the aiming position detection circuit 25a or not (step S10). When the raster scanning of the main display 12 is performed on the aiming position of the aiming controller 20 (not shown in the drawing) on the main display 12, the scanning light is detected by the photo sensor 23 and the detection pulse is transmitted to the aiming position detection circuit 25a. The aiming position detection circuit 25a determines whether the detection pulse is received or not.

When the detection pulse is inputted to the aiming position detection circuit 25a, the aiming position detection circuit 25a obtains the count values from the X counter 25b and the Y counter 25c and detects the X coordinate and the Y coordinate of the aiming position based on these counter values (step S11). Thereafter, the aiming position detection circuit 25a transmits the aiming position signal to the control circuit 30 of the main body 11 (step S12).

On the other hand, when it is determined that the pulse signal from the photo sensor 23 is not inputted to the aiming position detection circuit 25a, this implies that the aiming controller 20 does not indicate the aiming position on the game image of the main display 12, that is, the aiming controller 20 is not directed to the main display 12. Accordingly, the aiming position detection circuit 25a transmits an error signal to the control circuit 30 (step S13). When the processing in step S12 or S13 is executed, the processing is made to return to step S10 and the above-mentioned processing are repeatedly executed. As a result, the aiming position signal or the error signal is intermittently transmitted to the control circuit 30. Here, the photo sensor 23 and the aiming position detection part 25 function as aiming position detection means which detects the aiming position on the game image indicated by the aiming controller 20.

The main display in the present invention is not particularly limited and may be formed of the CRT or an LCD. Further, a display method of the main display is not particularly limited and may be an interlace method or a progressive method, for example. Further, the brightness of the main display is not particularly limited provided that the scanning light from the main display can be surely received by the photo sensor.

Further, in the present invention, the method for detecting the aiming position of the aiming controller is not particularly limited to the above-mentioned examples. For example, a sensor which measures the direction and/or position of the aiming controller may be provided and the aiming position may be detected based on a measured result obtained by the sensor.

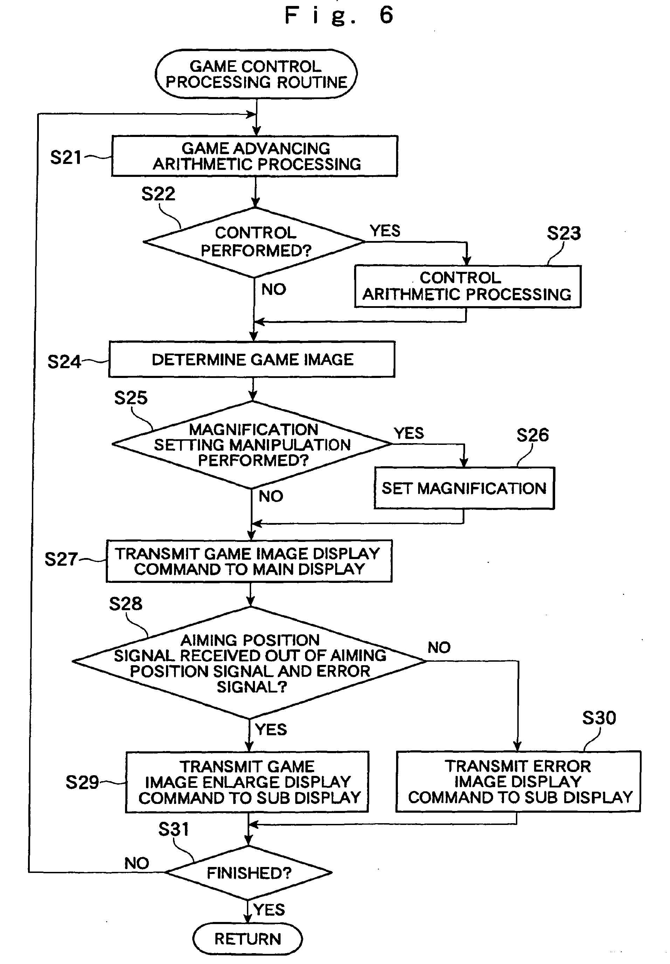

Fig. 6 is a flow chart showing a game control processing routine which is executed by the control circuit 30. Hereinafter, the explanation is made with respect to a case in which the game is in progress.

First of all, the CPU 31 performs the game advancing arithmetic processing (step S21). In this processing, the arithmetic processing related to the game advancing such as changes of various parameters related to the game and the decision of scenes or characters which are displayed as game images is performed.

Next, the CPU 31 determines whether the control button 15 is manipulated or not (step S22). That is, the CPU 31 determines whether a control signal from the control button 15 is detected or not.

When the CPU 31 determines that the control button 15 is manipulated, the CPU 31 performs the control arithmetic processing (step S23). In this processing, corresponding to the control content, the arithmetic processing related to the game advancing such as the change of respective parameters related to the game, the decision of the scenes and characters which are displayed as the game image is performed.

When the CPU 31 determines that the control button 15 is not manipulated in step S22, or the CPU 31 executes the processing of step S23, the CPU 31 performs the processing to determine the game image to be displayed on the main display 12 (step S24). This processing is performed based on the result of processing in the above-mentioned step S21 or step S23.

Next, the CPU 31 determines whether the magnification setting dial 21 is manipulated or not (step S25). That is, the CPU 31 determines whether the CPU receives the angular signal from the magnification setting dial 21 or not. When the CPU 31 determines that the magnification setting dial 21 is manipulated, the CPU 31 allows the memory 32 to store the data related to the magnification to set the magnifications corresponding to the above-mentioned angular signal (step S26).

When the CPU 31 determines that the magnification setting dial 21 is not manipulated in step S25 or when the processing of step S26 is executed, the CPU 31 transmits a command to display the game image on the main display 12 to the graphic display circuit 34 (step S27). Upon receiving the above-mentioned command, the graphic display circuit 34 generates the game image corresponding to the command and allows the main display 12 to display this game image.

Here, the graphic display circuit 34 functions as first display control means which performs the display control of the game image on the main display 12.

Next, the CPU 31 determines which signal the CPU 31 receives out of the aiming position signal and the error signal from the aiming position detection part 25 (step S28). These aiming position signal and error signal are supplied to the control circuit 30 when the subroutine described in Fig. 5 is executed in the aiming position detection circuit 25a.

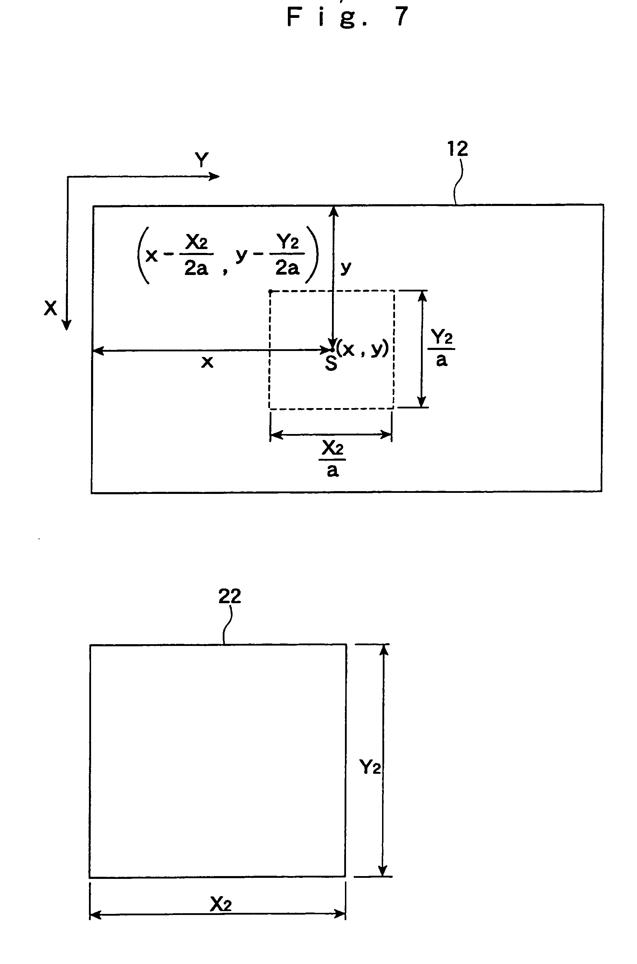

When the CPU 31 determines that the CPU 31 receives the aiming position signal from the aiming position detection part 25, the CPU 31 transmits a command to display a portion of the game image on the sub display 22 (22L, 22R) in an enlarged manner to the graphic display circuit 24 (step S29). Here, this processing is explained in conjunction with Fig. 7.

Fig. 7 is a view for explaining the processing related to the display control applied to the sub display 22. Here, the magnification is preliminarily set to a times and an area of the display region of the sub display 22 is set to X₂ × Y₂.

When the coordinates of the aiming position S in the main display 12 are (x, y), the coordinates of a reference point (a point at a left upper portion) of the game image displayed on the sub display 22 (22L, 22R) are (x-X₂/2a, y-Y₂/2a) and hence, the game image which is included in the region having an area (X₂/a) × (Y₂/a) from the reference point (a rectangular region indicated by a broken line in the drawing) constitutes the game image which is displayed on the sub display 22. In step S29 of the subroutine shown in Fig. 6, the CPU 31 transmits a command which enlarges the game image in the inside of the rectangular region indicated by a broken line "a" times and allows the sub display 22 to display the enlarged game image to the graphic display circuit 24. The graphic display circuit 24 which receives the above-mentioned command generates the game image corresponding to the command and allows the sub display 22 to display the game image. As a result, in the sub display 22, a portion of the game image including the aiming position is displayed in an enlarged manner with predetermined magnifications. Here, the graphic display circuit 24 functions as the second display control means which performs the enlarged display of the portion of the game image on the sub display 22.

On the other hand, when the CPU 31 does not receive the aiming position signal in step S28, the CPU 31 determines that the CPU 31 receives an error signal from the aiming position detection part 25 and hence, the CPU 31 transmits a command to the graphic display circuit 24 thus allowing the sub display 22 (22L, 22R) to display an error image that the aiming controller 20 is not directed to the main display 12 (step S30).

After executing the processing of step S29 or step S30, the CPU 31 determines whether the game is to be finished or not (step S31). When the determination is made not to finish the game, the processing is made to return to the step S21 and the above-mentioned processing is repeated. On the other hand, when the CPU 31 determines that the game is to be finished, this sub routine is completed.

Next, one example of the game which is performed by the gaming machine of this embodiment is explained along with the game image.

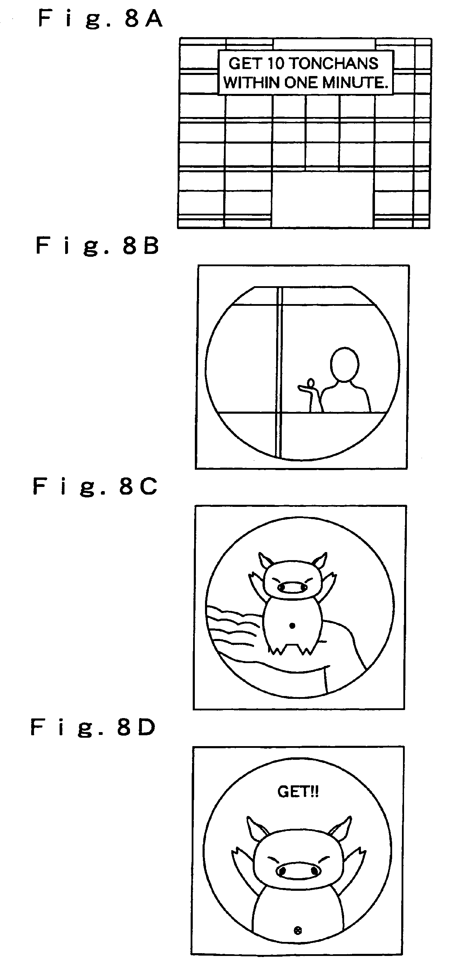

Fig. 8A is a view showing one example of the game image displayed on the main display 12, while Fig. 8B to Fig. 8D are views showing one example of the game image displayed on the sub display 22 (22L, 22R).

In the game image shown in Fig. 8A, the image indicating the purpose of game, "get 10 tonchans within one minute !!" is displayed and, at the same time, an image showing a building is displayed. In the game image displayed on the main display 12, the tonchans are not displayed. Accordingly, the player has to search the tonchans from the game image which is displayed in an enlarged manner on the sub display 22 (22L, 22R) using the aiming controller 20.

The game image shown in Fig. 8B is the game image displayed on the sub display 22, wherein the portion of the game image displayed on the main display 12 (see Fig. 8A) is displayed in an enlarged manner with a preset predetermined magnifications. A state that a figure is present in the building and the figure has something in his/her hand is shown. However, also in the inside of this game image, the tonchans are not displayed.

The game image shown in Fig. 8C is an image obtained by magnifying the game image shown in Fig. 8B and a state that tonchan rests on a palm is displayed. Then, when the player pushes control button 15 in a state that the tonchan is displayed in this manner, as shown in Fig. 8D, the image "GET!!" is displayed and at the same time, a mode that the tonchan is caught is displayed. Here, the player has succeeded in getting one tonchan.

According to the present invention, as can be understood from the above-mentioned embodiment, it is desirable that the enlarged display of the portion of the game image is performed on the sub display 22 (see Fig. 8C, Fig. 8D) in a state that the image (the character image showing tonchans) which is not included in the game image displayed on the main display 12 (see Fig. 8A) is included in the game display which is performed on the sub display 22 (22L, 22R). This is because that by allowing the diversified ways of watching the game image and the game contents to be closely associatedwith each other, the further enhancement of the interest can be realized.

According to the gaming machine 10, the usual game image is displayed on the main display 12, while the portion of the game image which contains the aimingposition indicated by the aiming controller 20 is displayed in an enlarged manner on the sub display 22 (22L, 22R). Accordingly, as explained in conjunction with the example shown in Fig. 8, the player can advance the game while watching the main display 12 (see Fig. 8A) and can manipulate the aiming controller 20 depending on the current state of the progress of game so as to display in an enlarged manner the arbitrary portion of the game image which the player particularly wants to watch in the sub display 22 (22L, 22R) (see Fig. 8B and Fig. 8C) whereby the player's ways of watching the game image can be diversified. As a result, it is possible to provide the gaming machine which exhibits the high interest.

Further, according to the gaming machine 10, the aiming controller 20 has the shape which imitates the binoculars and hence, it is possible to impart the player a feeling as if the player looks into a portion of the game image displayed on the main display actually using the binoculars whereby it is possible to perform the display of the game image which is vivid and full of reality.

Although the gaming machine of the present invention has been explained heretofore, the gaming machine of the present invention can adopt the following constitutions, for example.

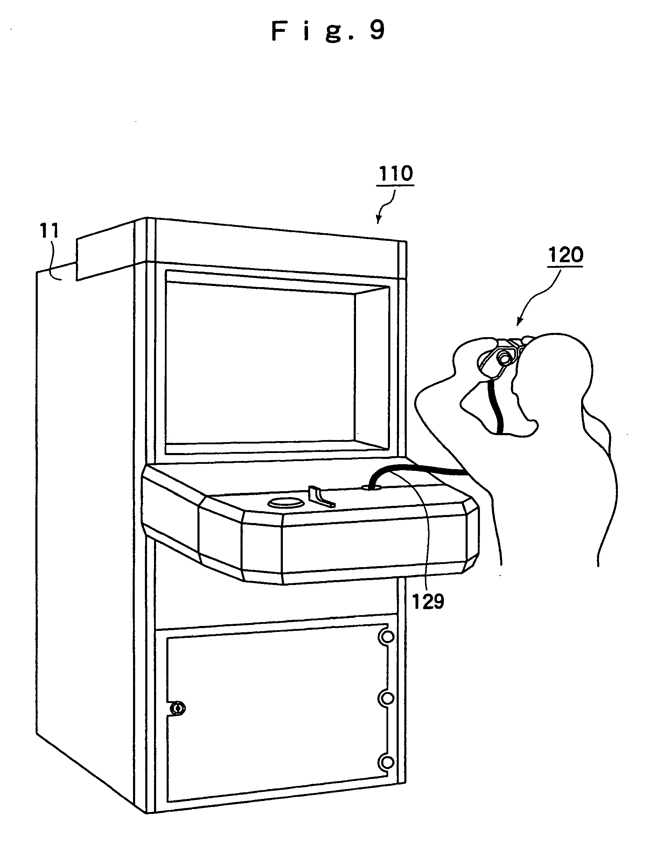

Fig. 9 is a perspective view showing another embodiment of the gaming machine of the present invention.

On a main body 111 of a gaming machine 110, a aiming controller 120 having a shape which imitates binoculars is provided by way of a cable 129.

Although the aiming controller 20 is mounted on the support strut 14 of the main body 11 in the gaming machine 10 shown in Fig. 1, by adopting the constitution shown in Fig. 9, the player can change not only the direction of the aiming controller 120 but also the position of the aiming controller 120 and hence, it is possible to have an advantageous effect that the operability can be enhanced.

In the present invention, the aiming controller may be configured to change the direction thereof as in the case shown in Fig. 1 and also may be configured to change the direction and the position thereof as in the case shown in Fig. 9. Further, the aiming controller may be configured to change only the position thereof.

Further, the gaming machine of the present invention is not limited to the above-mentioned embodiments and may adopt following constitutions, for example.

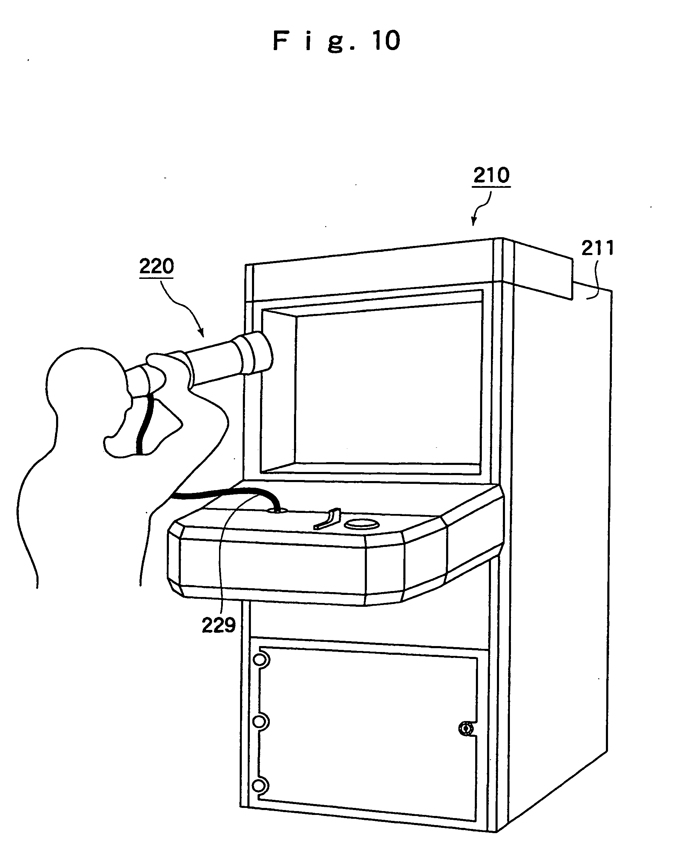

Fig. 10 is a perspective view showing another embodiment of the gaming machine of the present invention.

On a main body 211 of a gaming machine 210, an aiming controller 220 having a shape which imitates a telescope is provided by way of a cable 229.

Although two sub displays 22L, 22R are disposed in the inside of the aiming controller 20 in the gaming machine 10 shown in Fig. 10, by adopting the constitution shown in Fig. 10, it is possible to integrate the sub displays into one sub display. Since it is generally believed that the telescope has the higher magnifications than the binoculars, for example, by providing a game which adopts ultra-remote-distance bird watching, the astronomical observation or the like as a motif, it is possible to impart the player a feeling as if the player looks into a portion of the game image displayed on the main display actually using the telescope whereby it is possible to perform the display of the game image which is vivid and full of reality.

Further, the gaming machine of the present invention is not limited to the above-mentioned embodiments and may adopt following constitutions.

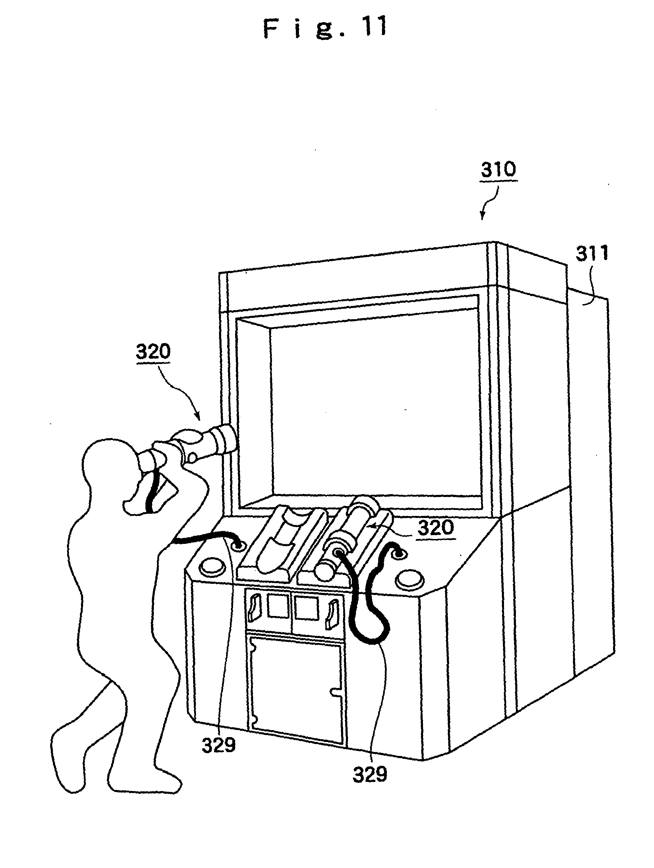

Fig. 11 is a perspective view showing another embodiment of the gaming machine of the present invention.

On a main body 311 of a gaming machine 310, two aiming controllers 320 having a shape which imitates a telescope is provided by way of cable 329 respectively.

In this manner, according to the present invention, it may possible to allow a plurality of players to play the game simultaneously by providing a plurality of aiming controllers.

Further, the gaming machine of the present invention is not limited to the above-mentioned embodiments and may adopt following constitutions.

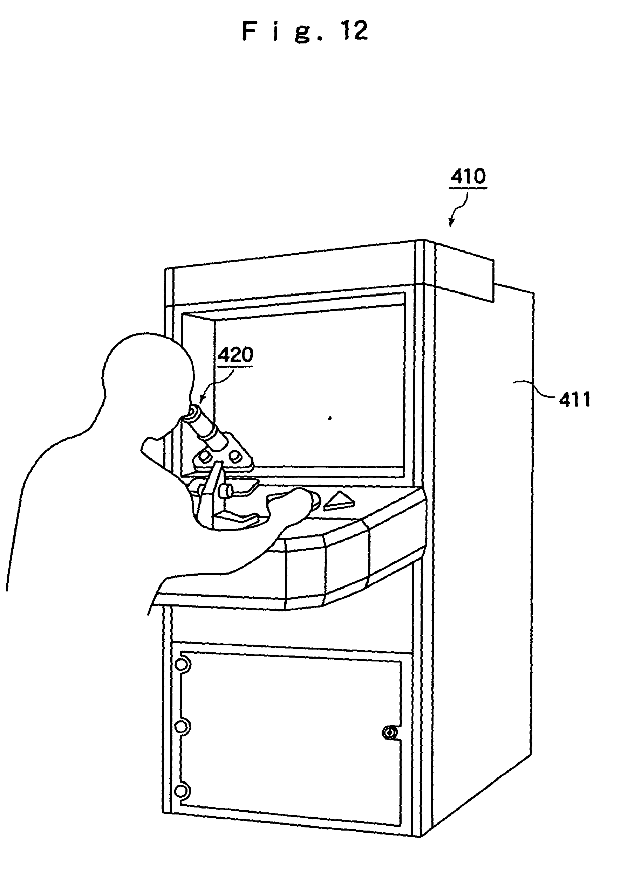

Fig. 12 is a perspective view showing another embodiment of the gaming machine of the present invention.

On a main body 411 of a gaming machine 410, an aiming controller 420 having a shape which imitates a microscope is mounted.

By adopting the constitution shown in Fig. 12, it is possible to provide a game which discovers microorganisms or virus or captures nucleus of cell or DNA and transplants them. In this case, it is possible to impart the player a feeling as if the player looks into a portion of the game image displayed on the main display actually using the microscope whereby it is possible to perform the display of the game image which is vivid and full of reality.

It is needless to say that the shape of the aiming controller is not limited to the above-mentioned embodiments. Further, as in the case of the above-mentioned embodiments, by allowing the shape of the aiming controller and the content of the game to have the move close relationship with each other, it is possible to provide the game having more interest. That is, the gaming machine can display the game images which are vivid and have enough reality.

Further, it is possible to apply the present invention to a gaming system which is constituted of a TV receiver set which constitutes the main display, the aiming indication display which incorporates the sub displays therein and the gaming machine for home use. In this case, the main body (gaming machine for home use) functions as the first display control means and the second display control means, while the aiming controller functions as the aiming position detection means.

According to the invention having the above-mentioned constitution, the usual game image is displayed on the main display and a portion of the game image including the aiming position indicated by the aiming controller is displayed on the sub display in an enlarged manner. Accordingly, for example, a player advances the game while watching the main display and, depending on the advancing state of the game, the player manipulates the aiming controller so as to display a portion which the player arbitrarily wants to watch in the game image on the sub display in an enlarged manner. Accordingly, the manner that the player watches the game image can be diversified. As a result, it is possible to provide the gaming machine with high interest.

According to the invention having the above-mentioned constitution, it is possible to impart the player a feeling as if the player looks into a portion of the game image displayed on the main display actually using the binoculars whereby it is possible to perform the display of the game image which is vivid and full of reality.

According to the invention having the above-mentioned constitution, the player can advance the game by manipulating the game process control part mounted on the main body using another hand while manipulating the aiming controller using one hand, the player can smoothly advance the game by arbitrarily watching either one of main display and the sub display.

According to the invention having the above-mentioned constitution, for example, in a state that the player watches the sub display mounted on the aiming controller, the user can manipulate the magnification setting control part mounted on the aiming controller while changing the direction and/or the position of the aiming controller using his/her single hand whereby the availability of the gaming control can be enhanced.

According to the invention having the above-mentioned constitution, the image which is not displayed on the main display is present and the player cannot watch such an image unless the image is not displayed on the sub display using the aiming controller. Accordingly, for example, the game is usually advanced based on the game image displayed on the main display and, when a specific event takes place, it is necessary to advance the game based on the image displayed on the sub display using the aiming controller and hence, it is possible to allow the diverse ways of watching the game image and the contents of the game to be closely associated with each other. As a result, the interest of playing the gaming machine is further enhanced.

The gaming machine (10) includes a main body (11) including a main display (12) on which a game image is displayed, an aiming controller (20) being configured to be capable of changing a direction and/or a position thereof in response to a control by a player and indicating an aiming position on the game image displayed on the main display (12), a sub display (22) mounted on the aiming controller (20) and having a portion of the game image displayed thereof in an enlarged manner, first display control means (30) performing a display control of the game image on the main display (12), aiming position detection means (25) detecting the aiming position on the game image indicated by the aiming controller (20); and second display control means (30) performing an enlarged display control of a portion of the game image on the sub display (22) such that the portion of the game image includes the aiming position detected by the aiming position detection means (25).

## Claims

1. A gaming machine (10) comprising:
a main body (11) including a main display (12) on which a game image is displayed;
an aiming controller (20) being configured to be capable of changing a direction and/or a position thereof in response to a control by a player and indicating an aiming position in the game image displayed on the main display (12);
a sub display (22) mounted on the aiming controller (20) and having a portion of the game image displayed thereof in an enlarged manner; first display control means (30) performing a display control of the game image on the main display (12);
aiming position detection means (25) detecting the aiming position in the game image indicated by the aiming controller (20); and
second display control means (30) performing an enlarged display control of a portion of the game image on the sub display (22) such that the portion of the game image includes the aiming position detected by the aiming position detection means (25),
**characterized in that**
the gaming machine (10) further includes a photo sensor (23) which receives a scanning light from the main display (12), and the aiming position detection means (25) detects the aiming position based on a reception signal of the scanning light from the photo sensor (23).

2. A gaming machine (10) according to claim 1, wherein the aiming controller (20) is detachably mounted on the main body (11).

3. A gaming machine (10) according to claim 1 or 2, wherein the main body (11) includes a game progress control part to which an instruction related to the advance of the game is inputted by a control performed by a player.

4. A gaming machine (10) according to any one of claims 1 to 3, wherein the aiming controller (20) includes a magnification setting control part (21) for setting the magnification of the game image to be displayed in an enlarged manner on the sub display (22).

## Patentansprüche

1. Spielvorrichtung (10), umfassend
einen Hauptkörper (11) mit einer Hauptanzeige (12), an der ein Bild eines Spieles angezeigt ist,
eine Ziel-Steuereinrichtung (20), die derart konfiguriert ist, dass sie eine Richtung und/oder eine Position derselben in Antwort auf eine Steuerung durch einen Spieler ändern kann und dass sie eine Zielposition in dem an der Hauptanzeige (12) angezeigten Bild des Spieles bezeichnen kann,
eine Nebenanzeige (22), die an der Ziel-Steuereinrichtung angebracht ist und an der ein Teil des Bildes des Spieles vergrößert angezeigt ist, ein erstes Anzeige-Steuermittel (30), welches eine Steuerung der Anzeige des Bildes des Spieles an der Hauptanzeige (12) durchführt,
ein Zielposition-Erfassungsmittel (25), welches die Zielposition in dem durch die Ziel-Steuereinrichtung (20) angezeigten Bild des Spieles erfasst, und
ein zweites Anzeige-Steuermittel (30), welches eine Steuerung der vergrößerten Anzeige eines Teils des Bildes des Spieles an der Nebenanzeige (22) derart durchführt, dass der Teil des Bildes des Spieles die durch das Zielposition-Erfassungsmittel (25) erfasste Zielposition enthält,
**dadurch gekennzeichnet, dass**
der Spielautomat (10) ferner einen Fotosensor (23) umfasst, welcher Abtastlicht von der Hauptanzeige (12) empfängt, und
das Zielposition-Erfassungsmittel (25) die Zielposition auf Grundlage eines Empfangssignals des Abtastlichtes von dem Fotosensor (23) erfasst.

2. Spielvorrichtung (10) nach Anspruch 1, wobei die Ziel-Steuereinrichtung (20) abnehmbar an dem Hauptkörper (11) angebracht ist.

3. Spielvorrichtung (10) nach Anspruch 1 oder 2, wobei der Hauptkörper (11) einen Spielablaufsteuerteil enthält, in den eine den Ablauf des Spieles betreffende Anweisung durch eine durch einen Spieler durchgeführte Steuerung eingegeben wird.

4. Spielvorrichtung (10) nach einem der Ansprüche 1 bis 3, wobei die Ziel-Steuereinrichtung (20) einen Vergrößerungseinstell-Steuerteil (21) zum Einstellen der Vergrößerung des vergrößert an der Nebenanzeige (22) anzuzeigenden Bildes des Spieles enthält.

## Revendications

1. Machine de jeux (10) comprenant :
un corps principal (11) comprenant un affichage principal (12) sur lequel une image de jeu est visualisée ;
un dispositif de contrôle de visée (20) configuré pour être en mesure de changer une direction et/ou une position de celui-ci en réponse à une commande par un joueur et indiquant une position de visée dans l'image de jeu visualisée sur l'affichage principal (12) ;
un affichage secondaire (22) monté sur le dispositif de contrôle de visée (20) et ayant une portion de l'image de jeu visualisée sur celui-ci d'une manière agrandie ;
des premiers moyens de commande d'affichage (30) effectuant une commande d'affichage de l'image de jeu sur l'affichage principal (12) ;
des moyens de détection de position de visée (25) détectant la position de visée dans l'image de jeu indiquée par le dispositif de contrôle de visée (20) ; et
des deuxièmes moyens de commande d'affichage (30) effectuant une commande d'affichage agrandi d'une portion de l'image de jeu sur l'affichage secondaire (22) de manière à ce que la portion de l'image de jeu comprenne la position de visée détectée par les moyens de détection de position de visée (25),
**caractérisée en ce que**
la machine de jeux (10) comprend en outre un photodétecteur (23) qui reçoit une lumière de balayage provenant de l'affichage principal (12) et les moyens de détection de position de visée (25) détectent la position de visée sur la base d'un signal de réception de la lumière de balayage provenant du photodétecteur (23).

2. Machine de jeux (10) selon la revendication 1, dans laquelle le dispositif de contrôle de visée (20) est monté de manière amovible sur le corps principal (11).

3. Machine de jeux (10) selon la revendication 1 ou 2, dans laquelle le corps principal (11) comprend une partie de commande de progression du jeu sur laquelle une instruction relative à l'avancement du jeu est entrée par une commande effectuée par un joueur.

4. Machine de jeux (10) selon l'une quelconque des revendications 1 à 3, dans laquelle le dispositif de contrôle de visée (20) comprend une partie de commande de réglage d'agrandissement (21) pour régler l'agrandissement de l'image de jeu à visualiser d'une manière agrandie sur l'affichage secondaire (22).
